# EUROPEAN PATENT APPLICATION

(11) **EP 1 783 630 A1**
(43) Date of publication of application: **09.05.2007**
(21) Application number: 05024143.9
(22) Date of filing: 04.11.2005
(51) Int. Cl.: G06F 17/30

(54) **System and method for dynamic generation of tables in HTML pages**

(71) Applicant: Samsung Electronics Co., Ltd., Suwon-si, Gyeonggi-Do (KR)
(72) Inventor: Lee, Joo-Min, Yongin-si, Gyeonggi-do (KR)
(74) Representative: Lang, Johannes

(57) **Abstract**

A data processing apparatus and method are capable of facilitating maintenance, such as debugging, provision of additional functions and the like, by adopting, as separate modules, a unit for fetching data from a database upon receipt of a request to output the data from a client, and a unit for producing the fetched data in a certain format.

## Description

### BACKGROUND OF THE INVENTION

### Technical Field

The present invention relates to web service and, more particularly, to a data processing apparatus and method capable of facilitating maintenance, such as debugging, provision of additional functions and the like, by adopting, as separate modules, a unit for fetching data from a database upon receipt of a request to output the data from a client, and a unit for producing the fetched data in a certain format.

### Related Art

In recent years, considerable development of data communication technology and its environment has led to widespread use of the Internet, as well as an increasing need for personal communication. The Internet is not just an information exchanging and managing tool for a particular group of people. Rather, it has become almost universally necessary in everyday life for information exchange, entertainment, shopping, broadcasting, and the like.

Typically, a service-requesting entity is called a "client" and an entity providing the service in response to the service request from the client is called a "server". The client normally makes a request for the service to the server by use of a web browser.

A data processing apparatus in a web system typically includes a Java server page (JSP) engine, a table producer, and a database.

When the JSP engine receives a request, via a browser, from a client for the output of data in a page-based table format, the JSP engine requests the table producer to produce data in the page-based table format using a servlet class file for producing the data in the page-based table format. The JSP engine also translates the data in the page-based table format into an HTML document, and transmits the HTML document to the client over a network.

The table producer includes a table-producing module for producing data in a page-based table format. Upon receipt of the request from the JSP engine to produce the data in the table format, the table producer produces the data in the page-based table format in a table-producing module, and provides the data table to the JSP engine. The data for producing the page-based table format may be stored in the database.

Furthermore, the table-producing module may be implemented in accordance with JSP. The table-producing module may include a source unit for fetching client-requested data from a database, and a source unit for producing the fetched data in a table with a certain format.

The table-producing module is difficult to implement since it has a source unit for fetching client-requested data from the database, and a source unit for producing the fetched data in the table with a certain format. Furthermore, there are difficulties in debugging the table-producing module and in performing maintenance, such as the provision of additional functions, due to complicated sources of the table-producing module implemented in accordance with JSP.

### SUMMARY OF THE INVENTION

The present invention has been developed to solve the aforementioned problems. It is an object of the present invention to provide a data processing apparatus and method capable of facilitating maintenance, such as debugging, provision of additional functions and the like, by adopting, as separate modules, a unit for fetching data from a database upon receipt of a request to output the data from a client, and a unit for producing the fetched data in a certain format.

According to an aspect of the present invention, there is provided a data processing apparatus for web service, the apparatus comprising: a storage unit having at least one set of data for web service and format information for producing the data as a document having a page-based table format; a first processor responsive to a request to output the data from a client for producing the data as a document having the page-based table format by use of the stored format information in the storage unit, and for transmitting the produced document to the client; and a second processor for acquiring, from the storage unit, the data requested by the client and the format information, for producing the data as a document having the page-based table format, and for providing the data and the format information to the first processor.

The format information for producing the data as a document having the page-based table format may include at least one of table name information and table list information indicating a table number.

The first processor and the second processor may be implemented in accordance with a Java server page (JSP).

The first processor may include a document translator for translating a produced document having the page-based table format into a hypertext markup language (HTML) document so as to send the produced document having the page-based table format to the client.

According to another aspect of the present invention, there is provided a data processing method for web service using a data processing module and an interface module, the method comprising the steps of: storing, in a database, data for web service and format information for producing the data as a document having a certain format; responding, by means of the data processing module, to a request, from a client, to output databy requesting acquisition, from the database,of the data and the format information for producing the data as a document having the certain format; acquiring, by means of the interface module, the data and the format information from the database, and providing the data and the format information to the data processing module in response to the request for acquisition, from the database, of the data and the format information for producing the data as a document having the certain format; and producing, by means of the data processing module, the data as a document having the certain format by use of the format information , and transmitting the produced document to the client.

The data processing module and the interface module may be implemented in accordance with a Java server page (JSP).

The steps of producing, by means of the data processing the data as a document having the certain format by use of the format information and transmitting the produced document to the client may include translating the produced document having the certain format into a hypertext markup language (HTML) document so as to transmit the produced document having the certain format to the client.

According to yet another aspect of the present invention, there is provided a data processing method for web service using a table-producing module and an interface module, the method comprising the steps of: storing, in a database, data for web service and format information for producing the data as a document having a page-based table format; responding, by means of the table-producing module, to a request, from a client, to output data by requesting acquisition, from the database, of the data and the format information for producing the data as a document having the page-based table format; responding to the request for acquisition, from the database, of the data and the format information for producing the data as a document having the page-based table format, acquiring, by means of the interface module, the data and the format information from the database, and providing the data and the format information to the table-producing module; and producing, by means of the table-producing module, the data as the document having the page-based table format by use of the format information, and transmitting the produced document to the client.

The table-producing module and the interface module may be implemented in accordance with a Java server page (JSP).

The format information for producing the data as a document having the page-based table format may include at least one of table name information and table list information indicating a table number.

The steps of producing, by means of the table-producing module, the data as a document having the page-based table format by use of the format information provided by the interface module and transmitting the produced document to the client may include translating the produced document having the page-based table format into a hypertext markup language (HTML) document so as to transmit the produced document having the page-based table format to the client.

### BRIEF DESCRIPTION OF THE DRAWINGS

A more complete appreciation of the present invention, and many of the attendant advantage thereof, will become readily apparent as the present invention becomes better understood by reference to the following detailed description when considered in conjunction with the accompanying drawings in which like reference symbols indicate the same or similar components, wherein:
FIG. 1 is a block diagram of a web system;
FIG. 2 is a block diagram of a data processing apparatus;
FIG. 3 is a flowchart of a data processing method corresponding to the data processing apparatus shown in FIG. 2;
FIG. 4 is a block diagram of a data processing apparatus according to an embodiment of the present invention; and
FIG. 5 is a flowchart of a data processing method corresponding to the data processing apparatus shown in FIG. 4.

### DETAILED DESCRIPTION OF THE INVENTION

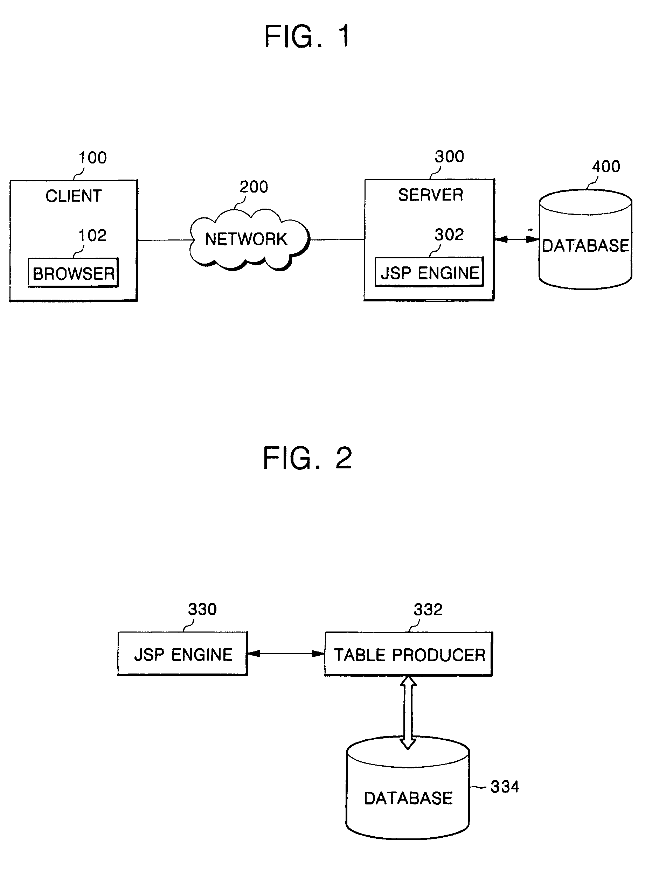

FIG. 1 shows a web system that processes a request to output data from a client via a web browser.

Referring to FIG. 1, the web system includes a client 100, a network 200, a server 300, and a database 400.

When the client 100 receives a request to output data from a user via a browser 102, the client 100 sends a data transmission request via the network 200 to the server 300. Upon receipt of the data from the server 300 over the network 200, the client 100 provides the data to the user via the browser 102.

In response to receipt of the data transmission request from the client 100, the server 300 allows a Java script page (JSP) engine 302 to process data for transmission to the client 100.

The JSP engine 302 includes a servlet class file for processing the data transmission request from the client 100. The JSP engine 302 processes the data transmission request from the client 100 using the servlet class file, produces the processed data as a hypertext markup language (HTML) document, and transmits the HTML document to the client 100 over the network 200.

If the JSP engine 302 has no servlet class file for processing the data transmission request from the client 100, the JSP engine 302 translates a JSP file for processing the data transmission request from the client 100 into a servlet file, and compiles the servlet file using a Java compiler to produce the servlet class file. By using the produced servlet class file, the JSP engine 302 processes the data transmission request from the client 100.

The database 400 contains data for processing the data transmission request from the client 100.

FIG. 2 is a block diagram of a data processing apparatus.

As shown in FIG. 2, the data processing apparatus in the web system includes a JSP engine 330, a table producer 332, and a database 334.

When the JSP engine 330 receives a request, via a browser from a client, for the output of data in a page-based table format, the JSP engine 330 requests the table producer 332 to produce the data in the page-based table format using a servlet class file for producing the data in the page-based table format.

The JSP engine 330 also translates the data in the page-based table format into an HTML document, and transmits the HTML document to the client 100 over the network 200 (FIG. 1).

The table producer 332 includes a table-producing module for producing data in a page-based table format. Upon receipt of the request from the JSP engine 330 to produce the data in the table format, the table producer 332 produces the data in the page-based table format IN a table-producing module, and provides the data table to the JSP engine 330. The data for producing the page-based table format may be stored in the database 334. Furthermore, the table-producing module may be implemented in accordance with the JSP.

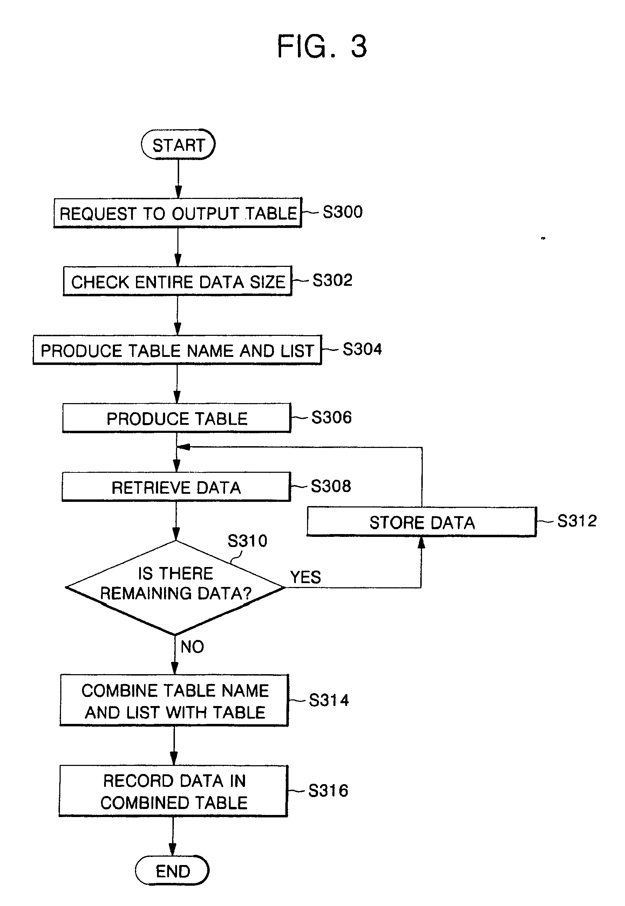

FIG. 3 is a flowchart of a data processing method corresponding to the data processing apparatus shown in FIG. 2.

Referring to FIG. 3, when receiving a request to output data in a page-based table format from client 100, the JSP engine 330 requests the table producer 332 to produce the data in the page-based table format by using a servlet class file for producing the data in the page-based table format (S300).

Upon receipt of the request to produce the data in the page-based table format from the JSP engine 330, the table producer 332 determines size information for the data to be produced in the page-based table format from the database 334 by using a table-producing module for producing data in the table format (S302). It is assumed that production of the table in the table producer 332 is performed by the table-producing module.

The table producer 332 fetches table name information from the database 334 to produce a table name, and produces a table list using determined size information for the data (S304). In the latter regard, the determined size information for the data indicates the number of columns of the table to be produced, and the table list is a list indicating a table number, which is a natural number corresponding to the number of columns set in the table.

The table producer 332 produces a number of tables corresponding to the number of the columns of the table to be produced (S306).

The table producer 332 then retrieves data to be recorded in the produced tables from the database 334 (S308). The data to be recorded in the produced tables may be stored in the database 334 in such a way as to correspond to a number indicating the column number of the table.

So long as the data to be recorded in the produced tables remains in the database 334, the table producer 332 fetches the data and stores the data in a memory (not shown) (S 310 and S312). The memory may be located in the table producer 332.

On the other hand, when no data to be recorded in the produced tables remains in the database 334, the table producer 332 combines the table name and list with the table (S314), and records the data fetched from the database 334 in the combined table (S316).

The present invention will now be described more fully with reference to the accompanying drawings, in which preferred embodiments of the invention are shown. This invention may, however, be embodied in different forms and should not be construed as being limited to the embodiments set forth herein. Rather, these embodiments are provided so that this disclosure will be thorough and complete, and will fully convey the concept of the invention to those skilled in the art.

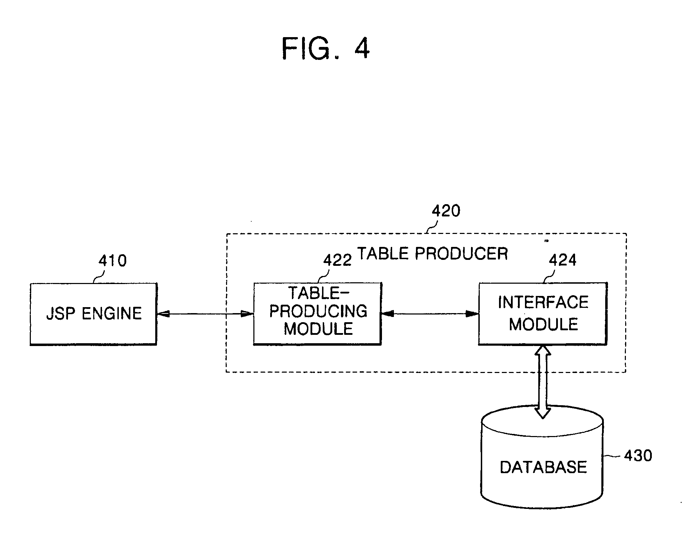

FIG. 4 is a block diagram of a data processing apparatus according to an embodiment of the present invention.

Referring to FIG. 4, a data processing apparatus according to the present invention includes a JSP engine 410, a table producer 420, and a database 430. The table producer 420 comprises a table-producing module 422 and an interface module 424.

When the JSP engine 410 receives a request, from a client (not shown) via a browser, to output data in a page-based table format, the JSP engine 410 requests the table producer 420 to produce the data in a page-based table format by use of a servlet class file for producing data in a page-based table format.

Upon receipt of the data in a page-based table format, the JSP engine 410 translates the data in the page-based table format into an HTML document, and transmits the HTML document to the client over a network.

The interface module 424 of the table producer 420 fetches the data from the database 430, and provides the data to the table-producing module 422 upon receipt from the JSP engine 410 of a request to produce the data in the table format. The table-producing module 422 then provides the data, provided by the interface module 424 in a certain table format, to the JSP engine 410. The table-producing module 422 and the interface module 424 may be implemented in accordance with Java script page (JSP).

The database 430 contains the data requested by the client in a table format, and contains table information for producing the data in the table format. The table information contains table name, data size, and table list information. The data size information indicates the number of columns of the table to be produced.

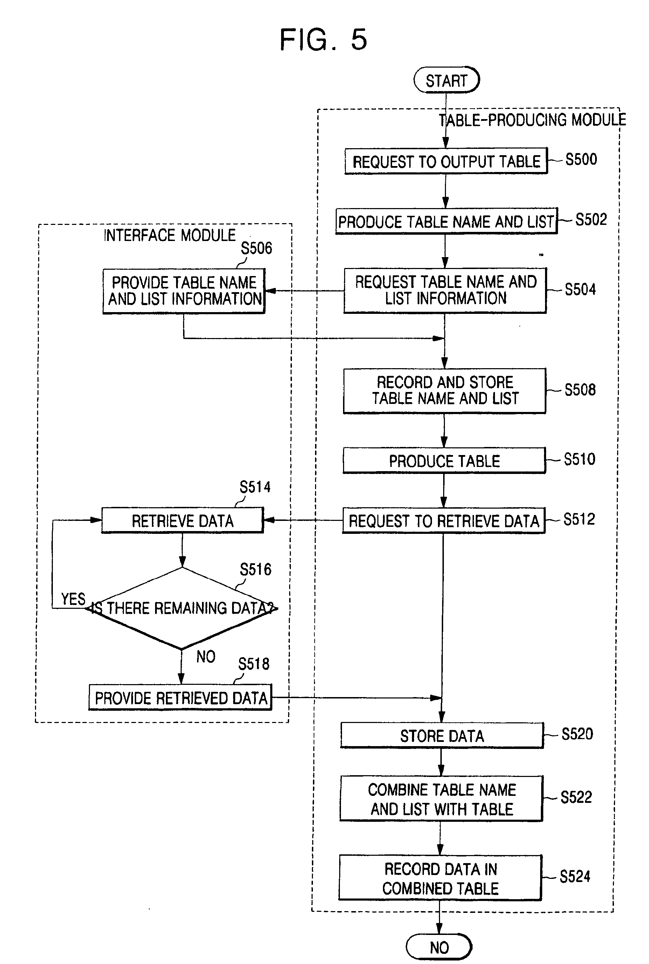

FIG. 5 is a flowchart illustrating a data processing method corresponding to the data processing apparatus shown in FIG. 4.

Referring to FIG. 5, when the JSP engine 410 receives a request from a client to output data in a table format, the JSP engine 410 requests the table producer 420 to produce the data in a page-based table format by use of a servlet class file for producing data in a page-based table fonnat.

When the table-producing module 422 receives the request to output data in a page-based table format from the JSP engine 410 (S500), the table-producing module 422 produces a table name record portion in which names of tables to be produced are recorded, and a list record portion for indicating the number of the tables (S502).

The table-producing module 422 requests the interface module 424 to send table name and list information which will be recorded in the produced table name and list record portions, respectively (S504).

In response to the request for table name and list information from the table-producing module 422, the interface module 424 fetches the table name and list information for the stored data in the database 430, and provides the information to the table-producing module 422 (S506).

The table-producing module 422 records the table name and list information provided by the interface module 424 in the table name and list record portions, respectively, and then stores the information in a storage unit (not shown) (S508). The storage unit may be contained in the table producer 420.

The table-producing module 422 produces a table to record the data by use of the table list information provided by the interface module 424 (S510). The table list information is a list indicating a table number, which is a natural number corresponding to the number of columns set in the table.

The table-producing module 422 requests the interface module 424 to retrieve the data to be recorded in the produced table from the database 430 (S512).

The interface module 424 retrieves the data stored in the database 430 in response to the request from the table-producing module 422 (S514).

The interface module 424 continues to retrieve data from the database 430 so long as there is data remaining in database 430 (S516), and provides the data to the table-producing module 422 (S518).

The table-producing module 422 stores the data to be recorded in the table in the storage unit (S520), and combines the produced table name and list portions with the table (S522).

The table-producing module 422 records the data stored in the storage unit in the combined table, and provides the document in the table format to the JSP engine 410 (S524).

As described above, the data processing apparatus and method according to the present invention is capable of facilitating maintenance, such as debugging, provision of additional functions and the like, by adopting, as separate modules, a unit for fetching data from a database upon receipt of a request to output the data from a client, and a unit for producing the fetched data in a certain format.

While the present invention has been particularly shown and described with reference to an exemplary embodiment thereof, it will be understood by those of ordinary skill in the art that various changes in form and detail may be made therein without departing from the spirit and scope of the present invention as defined by the following claims and their equivalents.

## Claims

1. A data processing apparatus for web service, comprising:
a storage unit for storing data for web service and format information for producing the data as a document having a page-based table format;
a first processor responsive to a request to output the data from a client for producing the data as the document having the page-based table format by use of the format information stored in the storage unit, and for transmitting the document to the client; and
a second processor for acquiring, from the storage unit, the data requested by the client and the format information for producing the data as the document having the page-based table format, and for providing the data and the format information to the first processor.

2. The apparatus according to claim 1, wherein the format information for producing the data as the document having the page-based table format comprises at least one of table name information and table list information indicating a table number.

3. The apparatus according to claim 1, wherein the first processor and the second processor are implemented in accordance with a Java server page (JSP).

4. The apparatus according to claim 1, wherein the first processor comprises:
a document translator for translating the document having the page-based table format into a hypertext markup language (HTML) document so as to send the document having the page-based table format to the client.

5. A data processing method for web service using a data processing module and an interface module, the method comprising the steps of:
storing, in a database, data for web service and format information for producing the data as a document having a certain format;
responding , at the data processing module, to a request, from a client, to output data by requesting acquisition, from the database, of the data and the format information for producing the data as the document having the certain format;
acquiring, at the interface module, the data and the format information from the database, and providing the data and the format information to the data processing module, in response to the request for acquisition, from the database, of the data and the format information for producing the data as the document having the certain format; and
producing, at the data processing module, the data as the document having the certain format by use of the format information, and transmitting the produced document to the client.

6. The method according to claim 5, wherein the data processing module and the interface module are implemented in accordance with a Java server page (JSP).

7. The method according to claim 5, wherein the certain format is a page-based table format.

8. The method according to claim 5, wherein the step of producing, at the data processing module, the data as the document having the certain format by use of the format information, and transmitting the produced document to the client, comprises:
translating the produced document having the certain format into a hypertext markup language (HTML) document so as to transmit the produced document having the certain format to the client.

9. A data processing method for web service using a table-producing module and an interface module, the method comprising the steps of:
storing, in a database, data for web service and format information for producing the data as a document having a page-based table format;
responding, at the table-producing module, to a request, from a client, to output data by requesting acquisition, from the database, of the data and the format information for producing the data as the document having the page-based table format;
responding to the request for acquisition, from the database, of the data and the format information for producing the data as the document having the page-based table format by acquiring, at the interface module, the data and the format information from the database, and providing the data and the format information to the table-producing module; and
producing, at the table-producing module, the data as the document having the page-based table format by use of the format information, and transmitting the document to the client.

10. The method according to claim 9, wherein at least one of the table-producing module and the interface module is implemented in accordance with a Java server page (JSP).

11. The method according to claim 9, wherein the format information for producing the data as the document having the page-based table format comprises at least one of table name information and table list information indicating a table number.

12. The method according to claim 9, wherein the step of producing, at the table-producing module, the data as the document having the page-based table format by use of the format information, and transmitting the produced document to the client comprises:
translating the document having the page-based table format into a hypertext markup language (HTML) document so as to transmit the document having the page-based table format to the client.
